# EUROPEAN PATENT SPECIFICATION

(11) **EP 3 565 147 B1**
(45) Date of publication and mention of the grant of the patent: **04.05.2022**
(21) Application number: 19181011.8
(22) Date of filing: 19.08.2011
(51) Int. Cl.: H04J 11/00, H04L 1/00, H04L 5/00

(54) **METHODS AND APPARATUS FOR ACTIVATING AND DEACTIVATING SECONDARY CELLS IN A CARRIER AGGREGATION ENVIRONMENT**
VERFAHREN UND VORRICHTUNG ZUR AKTIVIERUNG UND DEAKTIVIERUNG SEKUNDÄRER ZELLEN IN EINER TRÄGERAGGREGATIONSUMGEBUNG
PROCÉDÉS ET APPAREIL PERMETTANT D'ACTIVER ET DE DÉSACTIVER DES CELLULES SECONDAIRES DANS UN ENVIRONNEMENT D'AGRÉGATION DE PORTEUSES

(30) Priority: 19.08.2010 IN 2399CH2010
(43) Date of publication of application: 06.11.2019
(62) Divisional of application: 11818439.9
(73) Proprietor: Samsung Electronics Co., Ltd., Gyeonggi-do 16677 (KR)
(72) Inventor: Baghel, Sudhir Kumar, IN-560093 Bangalore (IN); Manepalli, Venkateswara Rao, IN-560093 Bangalore (IN)
(74) Representative: Nederlandsch Octrooibureau

(56) References cited:
- EP-A1- 2 526 711
- EP-A2- 2 502 456
- US-A1- 2010 130 219
- INTERDIGITAL COMMUNICATIONS: "Release of PUCCH resources and removal of SCell Configuration", 3GPP DRAFT; R2-104814 (HANDLING PUCCH AN AND SCELL CONFIGURATION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451955, [retrieved on 2010-08-17]

## Description

### Technical Field

The present invention relates to the field of carrier aggregation in wireless communication system, and more particularly relates to methods and apparatus for activating and deactivating secondary cells in a carrier aggregation environment.

### Background Art

Wireless communication systems are widely deployed to provide various communication services such as voice, video, packet data, broadcast, messaging, and so on. These systems may be multiple-access systems capable of supporting communication for multiple users by sharing the available system resources.

Recently, in wireless communication technologies such as long term evolution (LTE)/LTE Advanced (LTE-A), carrier aggregation has been introduced such that two or more component carriers are aggregated in order to support wider transmission bandwidths up to 100MHz. Carrier aggregation technique enables to configure a user equipment (UE) to aggregate different number of cells comprising component carriers and of possibly different bandwidths in both uplink and downlink.

Typically, in a carrier aggregation environment, a UE can have more than one cell with one being primary cell (Pcell) and one or more secondary cell (Scell) for data communication. Both Pcell and Scell may have a downlink component carrier and an uplink component carrier. At any given time, the LTE network can add or remove one or more Scells to the UE based on data requirements. Similarly, the LTE network can activate one or more configured Scells from a deactivated state and vice versa based on data requirements. For example, a configured Scell configured for the UE is deactivated from the activated state due to non-use of the configured Scell for data communication as the unused Scell may consume significant amount of battery power of the UE. The deactivated Scell may not be involved in any active data communication.

Typically, an e-nodeB communicates activation/deactivation of one or more Scells configured for use by the UE using a medium access control (MAC) control element (CE) command. Thus, the UE activates/deactivates the one or more Scells upon receiving the MAC CE command from the eNB. When the MAC CE command is received by the UE, the UE sends positive/negative acknowledgment (ACK/NACK). Usually, a physical uplink control channel (PUCCH) is used for transmission of ACK/NACK. However, when an uplink grant is available ACK/NACK is sent over physical uplink shared channel (PUSCH). It is well known that, the PUSCH provide good transmission reliability compared to the PUCCH.

US 2010/0130219 A1 discloses a method and apparatus for utilizing a plurality of uplink carriers and downlink carriers. A wireless transmit/receive unit (WTRU) activates a primary uplink carrier and a primary downlink carrier and activates or deactivates a secondary uplink carrier based on a signal from a network or upon detection of a pre-configured condition. When the secondary uplink carrier is activated, dedicated physical control channel (DPCCH) transmission may be initiated predetermined time periods prior to initiating E-DCH transmissions. The initial DPCCH transmission power may be set based on a DPCCH transmission power on the primary uplink carrier or to a value signaled by a network.

INTERDIGITAL COMMUNICATIONS: "Release of PUCCH resources and removal of SCell Configuration" (3GPP DRAFT; R2-104814, vol. RAN WG2, no. Madrid, Spain; 17 August 2010) discloses UE behaviour when a TAT expires, when the UE is configured with at least one SCell.

EP 2 526 711 A1 discloses methods to manage multiple component carriers (CCs) efficiently in a mobile network with carrier aggregation (CA). For CC activation/deactivation, a single LCID value is used to represent both activation and deactivation command. A single command with multiple instructions is provided to activate and/or deactivate multiple CCs.

EP 2 502 456 A2 discloses methods and apparatus for addressing wireless transmit/receive unit (WTRU) behavior in response to configuration, configuration parameters and access issues related to the activation/deactivation process when the WTRU may be configured with multiple serving cells or carrier aggregation.

### Disclosure of Invention

### Technical Problem

If the eNB does not receive the ACK/NACK due to reliability issues, the eNB may consider that the UE has not received the MAC CE command. However, if the UE does receive the MAC CE command, state of one or more Scells may remain unsynchronized between the UE and the eNB. For example, consider that the eNB transmits a MAC CE command for activating a Scell and the UE does receive the MAC CE command, but the corresponding ACK/NACK is not received by eNB. In such case, the eNB may assume that the Scell is not activated at the UE while the UE hasactivated the Scell due to failure to receive the ACK/NACK by eNB . This may result in significant loss of power at UE. Similarly, if the MAC CE command is for deactivation of Scell, the eNB may assume that the Scell is not deactivated at the UE while the UE has deactivated the Scell, thereby causing unwanted wastage of network resources and scheduling errors. Currently, the eNB is not sure whether the UE has successfully received the MAC CE command for activating/deactivating one or more Scells.

Further, upon activation of the Scell(s) at the UE, the eNB schedules data transmission over the activated Scell based on a set of parameters such as channel quality information (CQI), SRS, power head room (PHR), etc. associated with the activated Scell. However, the set of parameters used for scheduling data transmission may not be up-to-date and usage of outdated set of parameters may affect performance of the eNB and wastage of network resources.

### Solution to Problem

The present invention provides methods and apparatus for activating and deactivating secondary cells in a carrier aggregation environment.

### Advantageous Effects of Invention

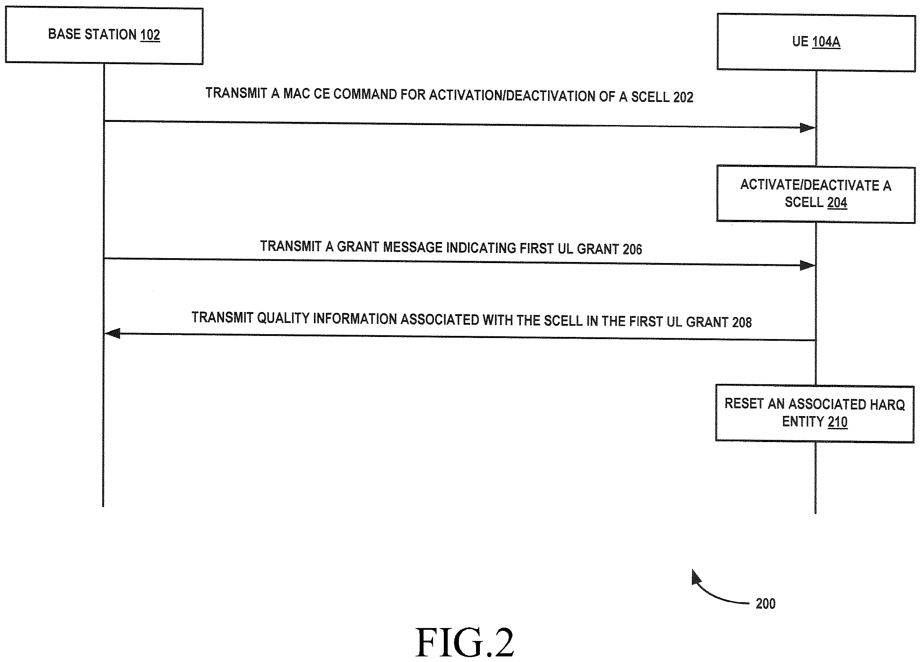

The present invention provides a method for activating and deactivating a secondary cell in a user equipment, UE, in a communication system based on carrier aggregation according to claim 1. The present invention provides a method for activating and deactivating a secondary cell at a base station in a communication system based on carrier aggregation according to claim 6. The present invention provides a user equipment, UE, according to claim 9. The present invention provides a base station according to claim 11. In one embodiment, a medium access control (MAC) control element (CE) command is received from a base station for activating/deactivating a secondary cell associated with user equipment (UE). Then, the secondary cell configured for user equipment is activated/deactivated based on the MAC CE command. Further, a first uplink grant is received from the base station upon activation/deactivation of the secondary cell. Accordingly, quality information (e.g., channel quality information and sounding reference signal information) associated with the cell(s) is transmitted to the base station in the received first uplink grant over a physical uplink shared channel. The control information is retransmitted by the base station in response to not receiving the quality information in the first uplink grant. According to a further embodiment, a hybrid automatic repeat request entity associated with the secondary cell is reset. The invention as claimed is based on the embodiment defined by Fig. 2 and the corresponding parts of the description. Further non-claimed embodiments may be useful for understanding the invention.

### Brief Description of Drawings

Figure 1 illustrates a block diagram of an exemplary carrier aggregation system capable of handling activation/deactivation of secondary cells configured for user equipments (UEs), according to one embodiment.
Figure 2 is a flow diagram illustrating an exemplary method of activating/deactivating a secondary cell(s) configured for the UE in a carrier aggregation environment, according to one embodiment.
Figure 3 is a flow diagram illustrating an exemplary method of activating/deactivating a secondary cell(s) configured for the UE in the carrier aggregation environment, according to another embodiment.
Figure 4 shows an example of the UE for implementing one or more embodiments of the present subject matter.

### Best Mode for Carrying out the Invention

The present invention provides methods and apparatus for activating and deactivating secondary cells in a carrier aggregation environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

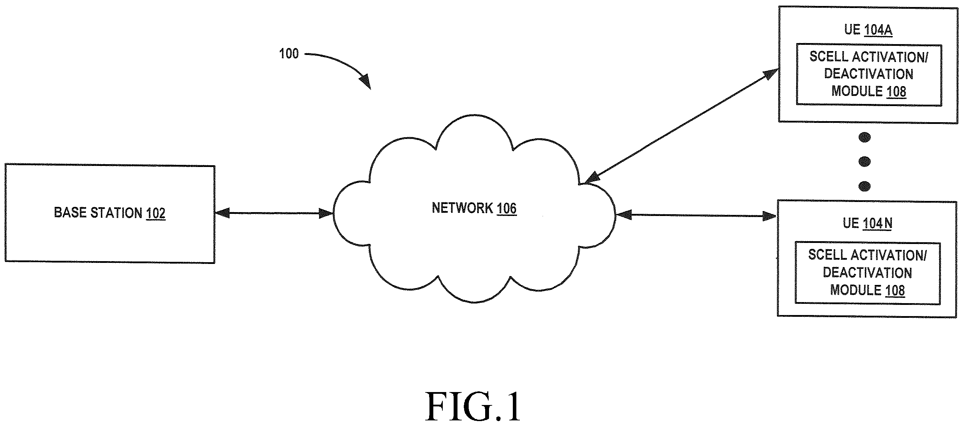

Figure 1 illustrates a block diagram of an exemplary carrier aggregation system 100 capable of handling activation/deactivation of secondary cells configured for user equipments (UEs) 104A-N, according to one embodiment. In Figure 1, the carrier aggregation system100 includes a base station 102, UEs 104A-N and a network 106. The UEs 104A-N may be mobile stations, laptops, cell phones, tablets and the like. Each of the UEs 104A-N includes a Scell activation/deactivation module 108. The base station 102 and the UEs 104A-N are connected wirelessly via the network 106.

Consider that, the base station 102 has configured a primary cell and a secondary cell for the UE 104A. Also, consider that the primary cell is in activated state and the secondary cell is the deactivated state. Based on the data transmission requirements, the base station 102 wishes to activate the secondary cell associated with the UE 104A from the deactivated state. In an exemplary operation, the base station 102 sends a medium access control (MAC) control element (CE) command for activating the secondary cell. The Scell activation/deactivation module 108 activates the secondary cell based on the MAC CE command.

Upon activation of the secondary cell, quality information (e.g., channel quality information, and sounding reference signal information) associated with the cell(s) is triggered by the Scell activation/deactivation module 108. Accordingly, the Scell activation/deactivation module 108 transmits the quality information to the base station 102 at a first uplink grant available upon activation of the secondary cell over a physical uplink shared channel. The quality information received at the base station 102 indicates that the secondary cell is activated at the UE 104A. Also, the quality information received upon activation of the secondary cell enables the base station 102 to schedule data transmission based on up-to-date quality information. One can envision that, the above described process is applicable for deactivation of the secondary cell from the activated state. Below description of Figures 2 through 3 provides various method steps associated with activation/deactivation of one or more secondary cells associated with the UE 104A in greater detail.

Figure 2 is a flow diagram 200 illustrating an exemplary method of activating/deactivating a secondary cell(s) configured for the UE 104A in a carrier aggregation environment, according to one embodiment. At step 202, the base station 102 transmits a MAC CE command for activation/deactivation of a secondary cell(s) configured for use by the UE 104A. At step 204, the UE 104A activates/deactivates the secondary cell(s) associated the UE 104A based on the MAC CE command. At step 206, the base station 102 transmits a grant message indicating a first uplink grant allocated to the user equipment 104A.

At step 208, the UE 104A transmits quality information associated with the cell(s) in the first uplink grant over a physical uplink shared channel (PUSCH). The quality information may include channel quality information (CQI) and/or sounding reference signal (SRS) information for the cell(s). In one embodiment, the quality information associated with the cell(s) is triggered when the secondary cell(s) are activated and/ordeactivated. For example, when the UE 104A activates/deactivates the secondary cell(s) as per the MAC CE command, aperiodic CQI and/or aperiodic/periodic SRS information is triggered at the UE 104A.

In another embodiment, the base station 102 may send a quality information trigger substantially simultaneously with the MAC CE command in a transport block over PDSCH. In this embodiment, the quality information is triggered based on the quality information trigger received in the transport block. For example, when the quality information trigger is aperiodic CQI trigger, the UE 104A transmits CQI associated with the cell(s). Alternatively, the UE 104A transmits SRS information associated with uplink quality of the cell(s) when the quality information trigger is aperiodic SRS trigger. Thus, the quality information transmitted in the first uplink grant helps the base station 102 to accurately schedule data transmission. Also,the quality information received at the base station 102 indicates that the UE 104A has received the MAC CE command and activated/deactivated the secondary cell(s) based on the MAC CE command. In other words, if the quality information is not received in the first uplink grant, the base station 102 understands that the UE 104A has not received the MC CE command and hence re-transmits the MAC CE command.

At step 210, the UE 104A resets a hybrid automatic repeat request (HARQ) entity associated with the secondary cell(s). In one embodiment, the UE 104A flushes HARQ buffers associated with one or more HARQ processes upon activation/deactivation of the secondary cell(s) in uplink and/or downlink. In another embodiment, when the corresponding secondary cell(s) is deactivated in uplink, the UE 104A flushes HARQ buffers associated with the HARQ processes and sets new data indicators (NDIs) associated with the HARQ processes to a value '0'. Additionally, the UE 104A reinitializes state variables of the HARQ processes. Also, for each of the downlink HARQ processes, the UE 104A considers a next received data transmission as a first data transmission.

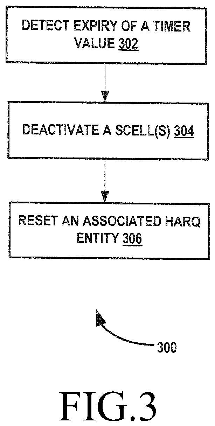

Figure 3 is a flow diagram 300 illustrating an exemplary method of deactivating a secondary cell(s) configured for the UE 104A in a carrier aggregation environment, according to another embodiment. At step 302, the UE 104A detects expiry of a timer value associated with a timing advance timer. At step 304, the UE 104A deactivates the secondary cell(s) associated the UE 104A when the timer value is expired.

At step 306, the UE 104A resets a HARQ entity associated with the secondary cell(s). When the corresponding secondary cell(s) is deactivated in uplink, the UE 104A flushes HARQ buffers associated with the HARQ processes and sets new data indicators (NDIs) associated with the HARQ processes to a value '0'. Additionally, the UE 104A reinitializes state variables of the HARQ processes.

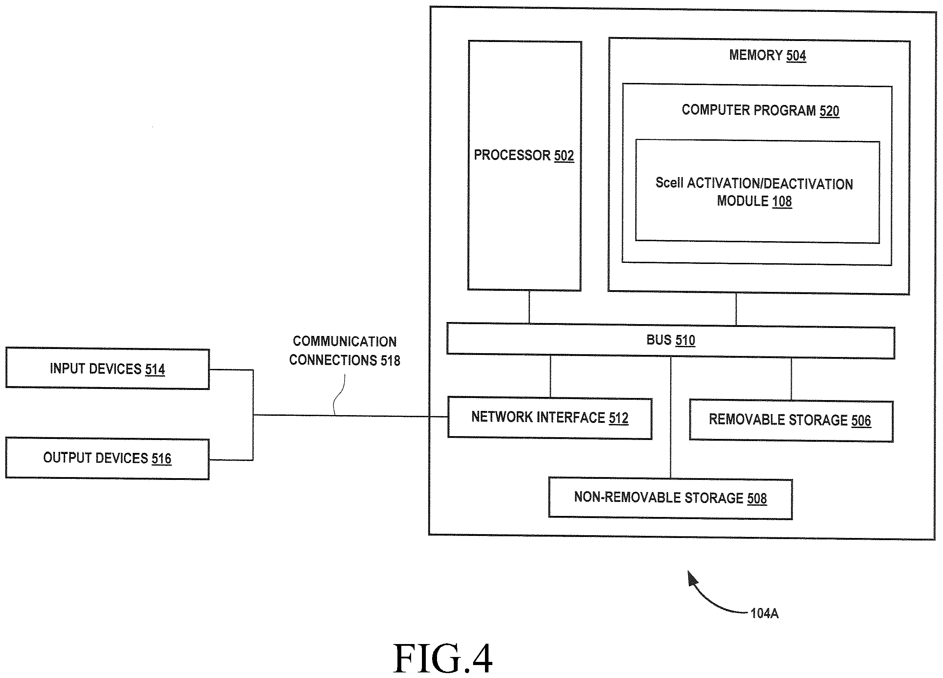

Figure 4 shows an example of the UE 104A for implementing one or more embodiments of the present subject matter. Figure 4 and the following discussion are intended to provide a brief, general description of the suitable UE 104A in which certain embodiments of the inventive concepts contained herein may be implemented.

The UE 104A may include a processor 502, memory 504, a removable storage 506, and a non-removable storage 508. The UE 104A additionally includes a bus 510 and a network interface 512. The UE 104A may include or have access to one or more user input devices 514, one or more output devices 516, and one or more communication connections 518 such as a network interface card or a universal serial bus connection. The one or more user input devices 514 may be keypad, mouse pad, and the like. The one or more output devices 516 may be a display of the UE 104A. The communication connections 518 may include a wireless communication network such as LTE.

A variety of computer-readable storage media may be stored in and accessed from the memory elements of the UE 104A, the removable storage 506 and the non-removable storage 508. Computer memory elements may include any suitable memory device(s) for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, Memory SticksTM, and the like.

The processor 502, as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processor 502 may also include embedded controllers, such as generic or programmable logic devices or arrays, application specific integrated circuits, single-chip computers, smart cards, and the like.

Embodiments of the present subject matter may be implemented in conjunction with program modules, including functions, procedures, data structures, and application programs, for performing tasks, or defining abstract data types or low-level hardware contexts. Machine-readable instructions stored on any of the above-mentioned storage media may be executable by the processor 502 of the UE 104A. For example, a computer program 520 may include the Scell activation/deactivation module 108 capable of performing activating and deactivating of secondary cells in a carrier aggregation environment and associated procedures, according to the teachings and herein described embodiments of the present subject matter. In one embodiment, the computer program 520 may be included on a compact disk-read only memory (CD-ROM) and loaded from the CD-ROM to a hard drive in the memory 504. The Scell activation/deactivation module 108 may cause the UE 104A to perform various functions according to the various embodiments of the present subject matter.

The present embodiments have been described with reference to specific example embodiments, it will be evident that various modifications and changes may be made to these embodiments without departing from the broader scope of the appended claims. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

The present embodiments have been described with reference to specific example embodiments, it will be evident that various modifications and changes may be made to these embodiments without departing from the broader scope of the appended claims. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method for activating/deactivating a secondary cell at a user equipment, UE, in a communication system based on carrier aggregation, the method comprising:
receiving (202), from a base station, control information for activating/deactivating at least one secondary cell; and
activating or deactivating (204) the at least one secondary cell using the control information; after activating or deactivating of the at least one secondary cell, receiving (206) grant information from the base station indicating a first uplink grant allocated to the UE;
transmitting (208), to the base station in the first uplink grant, quality information comprising channel quality information, CQI, based on the grant information; and
receiving the control information which is retransmitted by the base station in response to not receiving, in the first uplink grant, the quality information including the CQI transmitted based on the grant information.

2. The method of claim 1, further comprising:
resetting (210) a hybrid automatic repeat request, HARQ, entity associated with the at least one secondary cell upon deactivating the at least one secondary cell.

3. The method of claim 1, further comprising:
flushing hybrid automatic repeat request, HARQ, buffers associated with the one or more HARQ processes when the least one secondary cell is deactivated.

4. The method of claim 1, further comprising:
stopping any uplink transmission on the at least one secondary cell in response to deactivating the at least one secondary cell.

5. The method of claim1, wherein the quality information further comprises at least one of sounding reference signal, SRS, and a power head room, PHR.

6. A method for activating/deactivating a secondary cell at a base station in a communication system based on carrier aggregation, the method comprising:
transmitting (202), to a user equipment, UE, control information for activating/deactivating at least one secondary cell;
after transmitting the control information, transmitting (206) grant information to the UE indicating a first uplink grant allocated to the UE; and
in response to not receiving, in the first uplink grant, quality information comprising channel quality information, CQI, which is transmitted based on the grant information from the UE, retransmitting the control information to the UE.

7. The method of claim 6, wherein any uplink transmission from the UE on the at least one secondary cell is stopped in response to deactivating the at least one secondary cell.

8. The method of claim 6, further comprising: receiving, from the UE, quality information comprising at least one of sounding reference signal, SRS, and a power head room, PHR, for activating the at least one secondary cell.

9. A user equipment, UE, for activating/deactivating a secondary cell in a communication system based on carrier aggregation, the UE comprising:
a transceiver; and
a controller coupled to the transceiver, wherein the controller is configured to:
receive, from a base station, control information for activating/deactivating at least one secondary cell; and
activate or deactivate the at least one secondary cell using the control information; after activating or deactivating of the at least one secondary cell, receive grant information from the base station indicating a first uplink grant allocated to the UE;
transmit, to the base station in the first uplink grant, quality information comprising channel quality information, CQI, based on the grant information; and
receive the control information which is retransmitted by the base station in response to not receiving, in the first uplink grant, the quality information including the CQI which is transmitted based on the grant information.

10. The UE of claim 9, wherein the controller is further configured to be operated according to one of the methods in claims 2 to 5.

11. A base station for activating/deactivating a secondary cell in a communication system based on carrier aggregation, the base station comprising:
a transceiver; and
a controller coupled to the transceiver, wherein the controller is configured to:
transmit, to a user equipment, UE, control information for activating/deactivating at least one secondary cell;
after transmitting the control information, transmit grant information to the UE indicating a first uplink grant allocated to the UE; and
in response to not receiving, in the first uplink grant, quality information comprising channel quality information, CQI, which is transmitted based on the grant information from the UE, retransmit the control information to the UE.

12. The base station of claim 11, wherein the controller is further configured to be operated according to one of the methods in claims 7 to 8.

## Patentansprüche

1. Verfahren zum Aktivieren/Deaktivieren einer Sekundärzelle an einem Benutzergerät, UE, in einem Kommunikationssystem basierend auf Trägeraggregation, wobei das Verfahren Folgendes umfasst:
Empfangen (202) von Steuerungsinformationen zum Aktivieren/Deaktivieren mindestens einer Sekundärzelle von einer Basisstation; und
Aktivieren oder Deaktivieren (204) der mindestens einen Sekundärzelle unter Verwenden der Steuerungsinformationen;
nach dem Aktivieren oder Deaktivieren der mindestens einen Sekundärzelle, Empfangen (206) von Gewährungsinformationen, die eine erste Uplink-Gewährung anzeigen, die dem UE zugewiesen ist, von der Basisstation;
Übertragen (208) von Qualitätsinformationen, die Kanalqualitätsinformationen, CQI, umfassen, basierend auf den Gewährungsinformationen an die Basisstation in der ersten Uplink-Gewährung; und
Empfangen der Steuerungsinformationen, die als Antwort auf das Nichtempfangen der Qualitätsinformationen einschließlich der CQI, die basierend auf den Gewährungsinformationen übertragen werden, in der ersten Uplink-Gewährung von der Basisstation erneut übertragen werden.

2. Verfahren nach Anspruch 1, welches ferner Folgendes umfasst:
Zurücksetzen (210) einer hybriden automatischen Wiederholungsanforderungs(HARQ)-Entität, die mit der mindestens einen Sekundärzelle assoziiert ist, beim Deaktivieren der mindestens einen Sekundärzelle.

3. Verfahren nach Anspruch 1, welches ferner Folgendes umfasst:
Leeren von hybriden automatischen Wiederholungsanforderungs(HARQ)-Puffern, die mit dem einen oder den mehreren HARQ-Verfahren assoziiert sind, wenn die mindestens eine Sekundärzelle deaktiviert ist.

4. Verfahren nach Anspruch 1, welches ferner Folgendes umfasst:
Stoppen jeder Uplink-Übertragung auf der mindestens einen Sekundärzelle als Antwort auf das Deaktivieren der mindestens einen Sekundärzelle.

5. Verfahren nach Anspruch 1, wobei die Qualitätsinformationen ferner ein Sounding Reference Signal, SRS, und/oder einen Leistungsspielraum, PHR, umfassen.

6. Verfahren zum Aktivieren/Deaktivieren einer Sekundärzelle an einer Basisstation in einem Kommunikationssystem basierend auf Trägeraggregation, wobei das Verfahren Folgendes umfasst:
Übertragen (202) von Steuerungsinformationen zum Aktivieren/Deaktivieren mindestens einer Sekundärzelle an ein Benutzergerät, UE;
nach dem Übertragen der Steuerungsinformationen, Übertragen (206) von Gewährungsinformationen, die eine erste Uplink-Gewährung anzeigen, die dem UE zugewiesen ist, an das UE; und
als Antwort auf das Nichtempfangen von Qualitätsinformationen, die Kanalqualitätsinformationen, CQI, umfassen, die basierend auf den Gewährungsinformationen übertragen werden, in der ersten Uplink-Gewährung von dem UE, erneutes Übertragen der Steuerungsinformationen an das UE.

7. Verfahren nach Anspruch 6, wobei jede Uplink-Übertragung von dem UE auf der mindestens einen Sekundärzelle als Antwort auf das Deaktivieren der mindestens einen Sekundärzelle gestoppt wird.

8. Verfahren nach Anspruch 6, welches ferner Folgendes umfasst: Empfangen von Qualitätsinformationen, die ein Sounding Reference Signal, SRS, und/oder einen Leistungsspielraum, PHR, zum Aktivieren der mindestens einen Sekundärzelle umfassen, von dem UE.

9. Benutzergerät, UE, zum Aktivieren/Deaktivieren einer Sekundärzelle in einem Kommunikationssystem basierend auf Trägeraggregation, wobei das UE Folgendes umfasst:
einen Transceiver; und
eine Steuerung, die mit dem Transceiver gekoppelt ist, wobei die Steuerung konfiguriert ist zum:
Empfangen von Steuerungsinformationen zum Aktivieren/Deaktivieren mindestens einer Sekundärzelle von einer Basisstation; und
Aktivieren oder Deaktivieren der mindestens einen Sekundärzelle unter Verwenden der Steuerungsinformationen;
nach dem Aktivieren oder Deaktivieren der mindestens einen Sekundärzelle, Empfangen von Gewährungsinformationen, die eine erste Uplink-Gewährung anzeigen, die dem UE zugewiesen ist, von der Basisstation;
Übertragen von Qualitätsinformationen, die Kanalqualitätsinformationen, CQI, umfassen, basierend auf den Gewährungsinformationen an die Basisstation in der ersten Uplink-Gewährung; und
Empfangen der Steuerungsinformationen, die als Antwort auf das Nichtempfangen der Qualitätsinformationen einschließlich der CQI, die basierend auf den Gewährungsinformationen übertragen werden, in der ersten Uplink-Gewährung von der Basisstation erneut übertragen werden.

10. UE nach Anspruch 9, wobei die Steuerung ferner konfiguriert ist, um gemäß einem der Verfahren in den Ansprüchen 2 bis 5 betrieben zu werden.

11. Basisstation zum Aktivieren/Deaktivieren einer Sekundärzelle in einem Kommunikationssystem basierend auf Trägeraggregation, wobei die Basisstation Folgendes umfasst:
einen Transceiver; und
eine Steuerung, die mit dem Transceiver gekoppelt ist, wobei die Steuerung konfiguriert ist zum:
Übertragen von Steuerungsinformationen zum Aktivieren/Deaktivieren mindestens einer Sekundärzelle an ein Benutzergerät, UE;
nach dem Übertragen der Steuerungsinformationen, Übertragen von Gewährungsinformationen, die eine erste Uplink-Gewährung anzeigen, die dem UE zugewiesen ist, an das UE; und
als Antwort auf das Nichtempfangen von Qualitätsinformationen, die Kanalqualitätsinformationen, CQI, umfassen, die basierend auf den Gewährungsinformationen übertragen werden, in der ersten Uplink-Gewährung von dem UE, erneutes Übertragen der Steuerungsinformationen an das UE.

12. Basisstation nach Anspruch 11, wobei die Steuerung ferner konfiguriert ist, um gemäß einem der Verfahren in den Ansprüchen 7 bis 8 betrieben zu werden.

## Revendications

1. Procédé permettant d'activer/désactiver une cellule secondaire à un équipement d'utilisateur, UE, dans un système de communication sur la base d'une agrégation de porteuses, le procédé comprenant :
recevoir (202), à partir d'une station de base, des informations de commande pour activer/désactiver au moins une cellule secondaire ; et
activer ou désactiver (204) l'au moins une cellule secondaire en utilisant les informations de commande ;
après l'activation ou la désactivation de l'au moins une cellule secondaire, recevoir (206) des informations d'autorisation à partir de la station de base indiquant une première autorisation de liaison montante attribuée à l'UE ;
transmettre (208), à la station de base dans la première autorisation de liaison montante, des informations de qualité comprenant des informations de qualité de canal, CQI, sur la base des informations d'autorisation ; et
recevoir les informations de commande qui sont retransmises par la station de base en réponse à la non réception, dans la première autorisation de liaison montante, des informations de qualité comprenant les CQI transmises sur la base des informations d'autorisation.

2. Procédé selon la revendication 1, comprenant en outre :
réinitialiser (210) une entité de demande de répétition automatique hybride, HARQ, associée à l'au moins une cellule secondaire lors de la désactivation de l'au moins une cellule secondaire.

3. Procédé selon la revendication 1, comprenant en outre :
vider les mémoires tampon de demande de répétition automatique hybride, HARQ, associées aux un ou plusieurs processus de HARQ lorsque l'au moins une cellule secondaire est désactivée.

4. Procédé selon la revendication 1, comprenant en outre :
arrêter toute transmission de liaison montante sur l'au moins une cellule secondaire en réponse à la désactivation de l'au moins une cellule secondaire.

5. Procédé selon la revendication 1, où les informations de qualité comprennent en outre au moins l'un parmi un signal de référence de sondage, SRS, et une marge de puissance, PHR.

6. Procédé permettant d'activer/désactiver une cellule secondaire à une station de base dans un système de communication sur la base d'une agrégation de porteuses, le procédé comprenant :
transmettre (202), à un équipement d'utilisateur, UE, des informations de commande pour activer/désactiver au moins une cellule secondaire ;
après la transmission des informations de commande, transmettre (206) des informations d'autorisation à l'UE indiquant une première autorisation de liaison montante attribuée à l'UE ; et
en réponse à la non réception, dans la première autorisation de liaison montante, d'informations de qualité comprenant des informations de qualité de canal, CQI, qui sont transmises sur la base des informations d'autorisation en provenance de l'UE, retransmettre les informations de commande à l'UE.

7. Procédé selon la revendication 6, où toute transmission de liaison montante en provenance de l'UE sur l'au moins une cellule secondaire est arrêtée en réponse à la désactivation de l'au moins une cellule secondaire.

8. Procédé selon la revendication 6, comprenant en outre : recevoir, en provenance de l'UE, des informations de qualité comprenant au moins l'un parmi un signal de référence de sondage, SRS, et une marge de puissance, PHR, pour activer l'au moins une cellule secondaire.

9. Équipement d'utilisateur, UE, permettant d'activer/désactiver une cellule secondaire dans un système de communication sur la base d'une agrégation de porteuses, l'UE comprenant :
un émetteur-récepteur ; et
un contrôleur couplé à l'émetteur-récepteur, où le contrôleur est configuré pour :
recevoir, en provenance d'une station de base, des informations de commande pour activer/désactiver au moins une cellule secondaire ; et
activer ou désactiver l'au moins une cellule secondaire en utilisant les informations de commande ;
après l'activation ou la désactivation de l'au moins une cellule secondaire, recevoir des informations d'autorisation en provenance de la station de base indiquant une première autorisation de liaison montante attribuée à l'UE ;
transmettre, à la station de base dans la première autorisation de liaison montante, des informations de qualité comprenant des informations de qualité de canal, CQI, sur la base des informations d'autorisation ; et
recevoir les informations de commande qui sont retransmises par la station de base en réponse à la non réception, dans la première autorisation de liaison montante, des informations de qualité comprenant les CQI qui sont transmises sur la base des informations d'autorisation.

10. UE selon la revendication 9, où le contrôleur est configuré en outre pour être opéré selon l'un des procédés des revendications 2 à 5.

11. Station de base permettant d'activer/désactiver une cellule secondaire dans un système de communication sur la base d'une agrégation de porteuses, la station de base comprenant :
un émetteur-récepteur ; et
un contrôleur couplé à l'émetteur-récepteur, où le contrôleur est configuré pour :
transmettre, à un équipement d'utilisateur, UE, des informations de commande pour activer/désactiver au moins une cellule secondaire ;
après la transmission des informations de commande, transmettre des informations d'autorisation à l'UE indiquant une première autorisation de liaison montante attribuée à l'UE ; et
en réponse à la non réception, dans la première autorisation de liaison montante, d'informations de qualité comprenant des informations de qualité de canal, CQI, qui sont transmises sur la base des informations d'autorisation de l'UE, retransmettre les informations de commande à l'UE.

12. Station de base selon la revendication 11, où le contrôleur est configuré en outre pour être opéré selon l'un des procédés des revendications 7 à 8.
